# EUROPÄISCHE PATENTSCHRIFT

(11) **EP 0 544 731 B1**
(45) Veröffentlichungstag und Bekanntmachung des Hinweises auf die Patenterteilung: **29.06.1994**
(21) Anmeldenummer: 91914782.7
(22) Anmeldetag: 16.08.1991
(51) Int. Cl.: G11B 13/04, G11B 11/10, G11B 7/135, G11B 7/20

(54) **OPTISCHE ABTASTVORRICHTUNG**
OPTICAL SCANNING DEVICE
DISPOSITIF D'EXPLORATION OPTIQUE

(30) Priorität: 25.08.1990 DE 4026875
(43) Veröffentlichungstag der Anmeldung: 09.06.1993
(73) Patentinhaber: DEUTSCHE THOMSON-BRANDT GMBH, 78048 Villingen-Schwenningen (DE)
(72) Erfinder: MORIMOTO, Yasuaki, 1550-2 Rokusaki Sakurashi Shiba Pref. (JP)
(86) Internationale Anmeldenummer: EP9101557
(87) Internationale Veröffentlichungsnummer: WO9203821

(56) Entgegenhaltungen:
- EP-A- 309 721
- FR-A- 2 578 083
- US-A- 4 858 218
- Patent Abstracts of Japan Vol. 13, No. 353 (P-477)(2258) 15 July 1986,&JP-A-61 042738
- Patent Abstracts of Japan Vol. 13, No. 353 (P-913)(3701) 8 August 1989 &JP-A-01 112552

## Beschreibung

Die Erfindung betrifft ein Verfahren für eine optische Abtastvorrichtung zum Lesen eines magneto-optischen Aufzeichnungsträgers, auf dem Daten übereinander in einer magnetischen Schicht und in Form von Pits gespeichert sind, wobei eine Lichtquelle Licht auf den Aufzeichnungsträger strahlt und wobei das vom Aufzeichnungsträger reflektierte Licht in Abhängigkeit von seiner Polarisationsrichtung auf einen ersten Photodetektor oder auf einen zweiten Photodetektor gelenkt wird.

Ein bekannter optischer Aufzeichnungsträger ist z.B. die CD-Platte, bei der auf die lichtdurchlässige Schicht eine lichtreflektierende Aluminiumschicht folgt. Die lichtreflektierende Aluminiumschicht weist Vertiefungen, sogenannte Pits, auf, welche die auf der CD-Platte gespeicherten Daten darstellen. Mittels einer optischen Abtastvorrichtung sind die Daten von der CD-Platte lesbar, weil das Reflexionsverhalten der lichtreflektierenden Aluminiumschicht von dem Muster abhängt, das die Vertiefungen auf der Platte bilden. Von einer Vertiefung, häufig auch groove genannt, wird weniger Licht reflektiert als von einem Hügel, der oft auch als land bezeichnet wird.

An der Intensität des von der CD-Platte reflektierten Lichts erkennt daher die optische Abtastvorrichtung, ob es sich bei dem abgetasteten Bit z.B. um eine logische Eins oder eine logische Null handelt.

Ein weiterer derartiger optischer Aufzeichnungsträger, unter der Bezeichnung magneto-optische Platte bekannt, ist in dem Aufsatz "Magnetooptische Versuche dauern an" in Funkschau 13, 20. Juni 1986, auf Seite 37 - 41 beschrieben.

Im Gegensatz zu einer herkömmlichen CD-Platte weist eine magneto-optische Platte keine Pits auf. Hinter der lichtdurchlässigen Schicht befindet sich eine magnetische Schicht, in die Daten aufzeichenbar und von der Daten lesbar sind. Es wird zunächst erläutert, wie Daten auf eine magneto-optische Platte geschrieben werden.

Mittels eines auf die Platte fokussierten Laserstrahls wird die magnetische Schicht über die Curie-Temperatur erhitzt. Meist genügt es jedoch, die magnetische Schicht nur bis zu der etwas unterhalb der Curie-Temperatur liegenden Kompensationstemperatur zu erwärmen. Hinter dem Brennpunkt auf der Platte ist ein Elektromagnet angeordnet, der den vom Laserstrahl erhitzten Bereich in die eine oder andere Magnetisierungsrichtung magnetisiert. Weil nach Abschalten des Laserstrahls die erhitzte Stelle wieder unter die Curie-Temperatur abkühlt, bleibt die vom Elektromagneten festgelegte Magnetisierungsrichtung erhalten; sie friert sozusagen ein. Auf diese Weise werden die einzelnen Bits in Domänen unterschiedlicher Magnetisierungsrichtung gespeichert. Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder nach links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen meßbaren Winkel nach links oder rechts gedreht.

An der Drehung der Polarisationsebene des von der Platte reflektierten Lichtstrahls erkennt die optische Abtastvorrichtung, welches Bit vorliegt, eine logische Eins oder eine logische Null. Im Gegensatz zu einer CD-Platte mit Pits ist eine magneto-optische Platte nahezu beliebig oft lösch- und wieder beschreibbar.

Aus der US-PS 4 858 218 ist eine optische Abtastvorrichtung zum Lesen einer magneto-optischen Platte bekannt, auf der 2 benachbarte Datenspuren vorgesehen sind. Auf der ersten Datenspur sind die Daten magnetisch aufgezeichnet, während sie auf der zweiten Datenspur optisch in Form von Pits gespeichert sind. Bei einer Weiterbildung dieser Magneto-optischen Platte liegen die magnetische Spur und die Spur mit den Pits übereinander. Der von der Platte reflektierte Lichtstrahl wird in Abhängigkeit von seiner Polarisationsrichtung entweder auf einen ersten oder einen zweiten Fotodetektor reflektiert. Die Ausgänge der beiden Fotodetektoren sind mit den Eingängen eines Differenzverstärkers und eines Additionsverstärkers gebunden. Am Ausgang des Additionsverstärkers ist das mittels der Pits aufgezeichnete Datensignal abnehmbar, während der Ausgang des Differenzverstärkers das in der magnetischen Schicht gespeicherte Datensignal liefert.

Aus der DE-OS 37 32 875 ist ein plattenförmiger Aufzeichnungsträger bekannt, der eine Kombination aus einer optischen und einer magneto-optischen Platte darstellt. Auf diesem Aufzeichnungsträger sind sowohl Daten mittels Pits als auch in der magnetischen Schicht der Platte gespeichert. Weil die Pits und die magnetischen Domänen übereinander liegen, sind an ein und derselben Stelle sowohl Daten in Form von Pits als auch in der magnetischen Schicht gespeichert. Das Speichervermögen dieser Platte ist daher doppelt so groß wie das einer normalen optischen Platte oder einer magneto-optischen Platte.

In der DE-OS 37 32 874 ist eine optische Abtastvorrichtung erläutert, die für die drei angeführten Plattentypen geeignet ist, denn diese optische Abtastvorrichtung vermag sowohl Daten von einer optischen Platte, z.B. einer Compact-Disc, einer magneto-optischen Platte als auch von einer Platte lesen, die aus der DE-OS 37 32 875 bekannt ist.

Bei dieser optischen Abtastvorrichtung wird das Licht eines Lasers auf die Platte fokussiert und von dort zu einem Polarisationsstrahlteiler reflektiert, der es in Abhängigkeit von seiner Polarisationsrichtung entweder auf einen ersten oder einen zweiten Photodetektor reflektiert. Aus der Differenz der Photospannungen des ersten und des zweiten Photodetektors wird das Datensignal gewonnen, das in den magnetischen Domänen der Platte gespeichert ist. Aus der Summe der Photospannungen des ersten und des zweiten Photodetektors wird dasjenige Datensignal erzeugt, das die mittels der Pits auf der Platte gespeicherten Daten wiedergibt. Die in der DE-OS 37 32 874 beschriebene optische Abtastvorrichtung kann bei einer Platte, wie sie in der DE-OS 37 32 875 angegeben ist, gleichzeitig sowohl die mittels der Pits als auch die in den magnetischen Domänen gespeicherten Daten lesen.

Weil aber die Pits ebenfalls eine, wenn nur sehr geringe Drehung, der Polarisationsrichtung des vom Laser abgestrahlten Lichts verursachen, läßt sich Nebensprechen zwischen dem durch Abtasten der Pits gewonnenen Datensignal und dem mit Hilfe des Kerr-Effektes aus den magnetischen Domänen gelesenen Datensignals nicht vollständig vermeiden. Um dieses Nebensprechen genügend zu dämpfen, müssen Mindestabstände zwischen den einzelnen Datenspuren sowie eine Mindestlänge und Mindestbreite der Pits eingehalten werden. Diese Mindestgrößen beschränken aber die Speicherkapazität des Aufzeichnungsträgers.

Es ist deshalb Aufgabe der Erfindung, das unerwünschte Nebensprechen möglichst vollständig zu unterdrücken.

Die Erfindung löst diese Aufgabe dadurch, daß ein vorderer Lichtstrahl, der in einer ersten Polarisationsebene polarisiert ist, und ein hinterer Lichtstrahl, der in einer zur ersten Polarisationsebene senkrecht stehenden zweiten Polarisationsebene polarisiert ist, so auf den Aufzeichnungsträger gerichtet sind, daß der vordere Lichtstrahl in einem vorgebbaren Abstand vor dem hinteren Lichtstrahl auf den Aufzeichnungsträger trifft, daß die in der ersten Polarisationsebene schwingende Komponente des vom Aufzeichnungsträger reflektierten vorderen Lichtstrahls auf einen ersten Photodetektor und die in der zweiten Polarisationsebene schwingende Komponente des vom Aufzeichnungsträger reflektierten vorderen Lichtstrahls auf einen zweiten Photodetektor gelenkt wird, daß die in der ersten Polarisationsebene schwingende Komponente des vom Aufzeichnungsträger reflektierten hinteren Lichtstrahls auf einen Vierquadrantenphotodetektor aus vier Photodioden und die in der zweiten Polarisationsebene schwingende Komponente des vom Aufzeichnungsträger reflektierten hinteren Lichtstrahls auf einen dritten Photodetektor gelenkt wird, daß aus den Ausgangssignalen des Vierquadrantenphotodetektors ein Fokusfehlersignal für einen Fokusregelkreis und ein Spurfehlersignal für einen Spurregelkreis erzeugt werden und daß durch Addition der Ausgangssignale des ersten Photodetektors und des zweiten Photodetektors dasjenige Datensignal gewonnen wird, das die in den Pits gespeicherten Daten wiedergibt, während durch Addition und Subtraktion der Ausgangssignale des ersten, zweiten und dritten Photodetektors sowie durch zeitliche Verzögerung der Ausgangssignale des ersten und zweiten Photodetektors, die gerade den Abstand zwischen dem vorderen und hinteren Lichtstrahl kompensiert, dasjenige Datensignal gewonnen wird, das die in der magnetischen Schicht gespeicherten Daten wiedergibt.

Es zeigen
- Figur 1: ein Ausführungsbeispiel der Erfindung;
- Figur 2: die Lage der Lichtstrahlen auf dem Aufzeichnungsträger;
- Figur 3: einen doppelbrechenden Kristall zur Erzeugung zweier Lichtstrahlen;
- Figur 4: zwei Laser zur Erzeugung zweier Lichtstrahlen;
- Figur 5: eine elektrische Schaltungsanordnung zur Erzeugung der Regel- und der Datensignale;
- Figur 6: das Datensignal, das die in der magnetischen Schicht gespeicherten Daten wiedergibt.

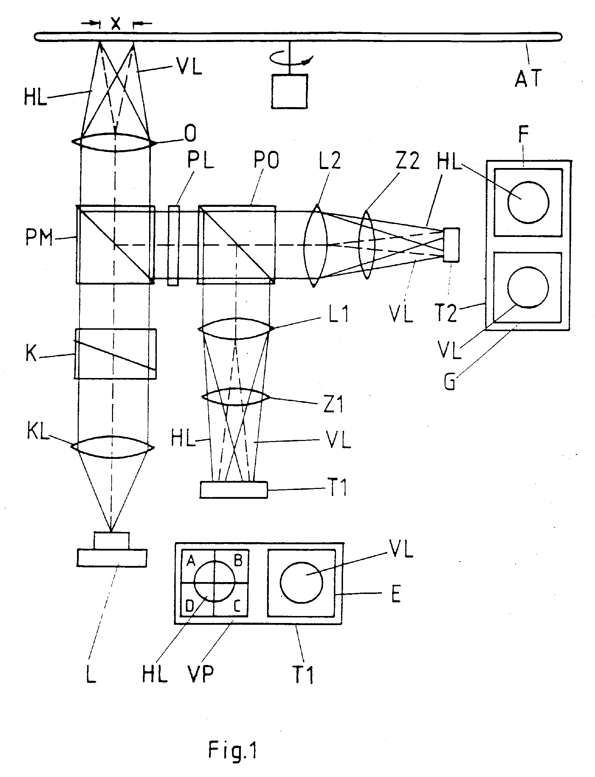

Die Erfindung wird nun anhand des in Figur 1 gezeigten Ausführungsbeispiels beschrieben und erläutert.

In der Figur 1 strahlt das von einem Laser L erzeugte Licht durch eine Kollimatorlinse KL auf einen doppelbrechenden Kristall K, der das Licht des Lasers L in einen vorderen Lichtstrahl VL und in einen hinteren Lichtstrahl HL aufteilt, deren Polarisationsrichtungen senkrecht zueinander stehen. Der vordere Lichtstrahl VL und der hintere Lichtstrahl HL strahlen vom doppelbrechenden Kristall K durch einen Prismenstrahlteiler PM und eine Objektivlinse 0, welche die beiden Lichtstrahlen VL und HL mittels eines Fokusregelkreises auf den Aufzeichnungsträger AT fokussiert. Vom Aufzeichnungsträger AT werden die beiden Lichtstrahlen VL und HL, die Objektivlinse 0 durchstrahlend zurück zum Prismenstrahlteiler PM reflektiert, der sie zu einer λ/2-Platte PL und einem hinter ihr angeordneten Polarisationsstrahlteiler PO lenkt. Der Polarisationsstrahlteiler PO lenkt den vorderen Lichtstrahl VL in Abhängigkeit von seiner Polarisationsrichtung entweder auf einen Photodetektor E oder einen Photodetektor G. Der Polarisationsstrahlteiler PO lenkt den hinteren Lichtstrahl HL in Abhängigkeit von seiner Polarisationsrichturg entweder auf einen Vierquadrantenphotodetektor VP, der aus vier Photodioden A, B, C und D aufgebaut ist, oder auf einen Photodetektor F.

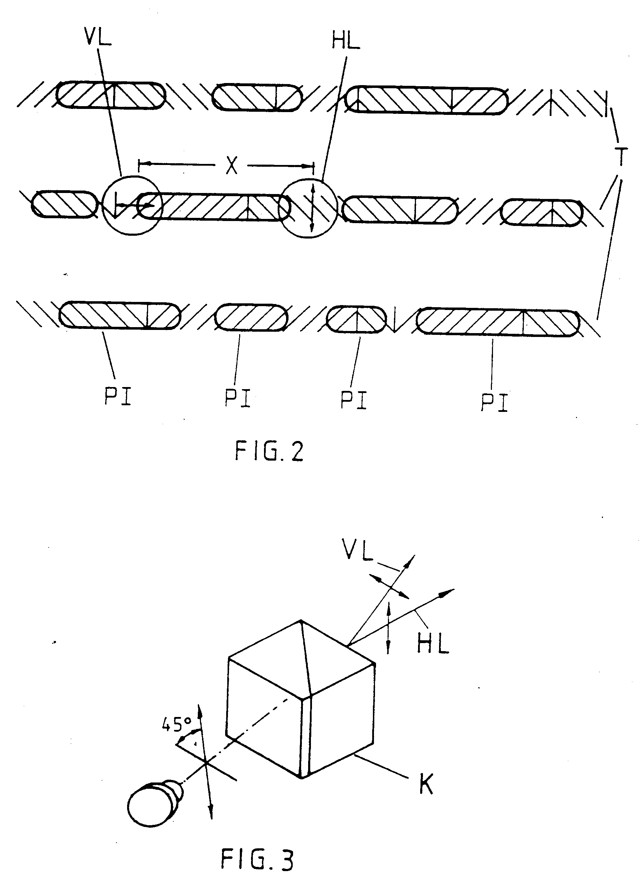

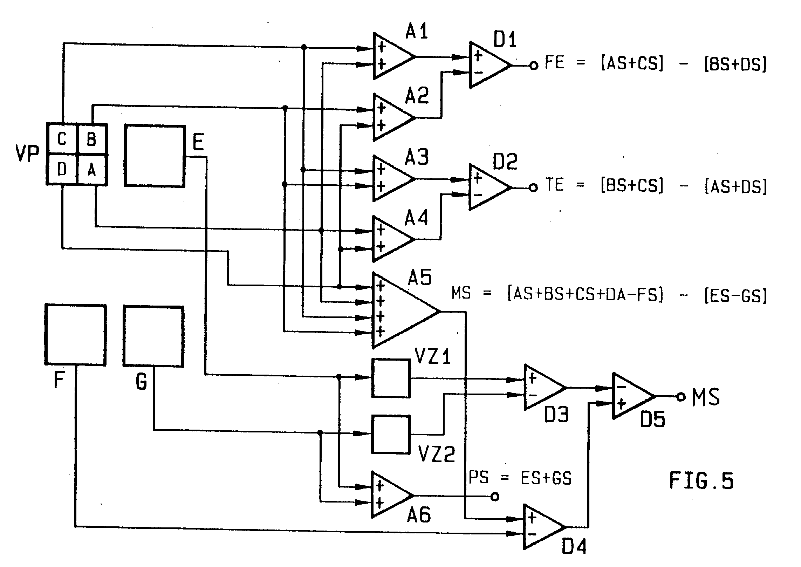

In der Figur 2 ist ein Ausschnitt der Oberfläche des Aufzeichnungsträgers AT abgebildet. Entlang den Datenspuren T sind die Pits PI angeordnet. Die Magnetisierungsrichtung der magnetischen Schicht ist durch die unterschiedliche Schraffur angedeutet. Der vordere Lichtstrahl VL und der hintere Lichtstrahl HL werden mittels des Fokusregelkreises auf den Aufzeichnungsträger AT fokussiert und mittels des Spurregelkreises entlang der Datenspuren T geführt. Der vordere Lichtstrahl VL strahlt in einem vorgebbaren Abstand X vor dem hinteren Lichtstrahl HL auf den Aufzeichnungsträger AT. Wie durch die Doppelpfeile angedeutet ist, liegt die Polarisationsrichtung des vorderen Lichtstrahls VL parallel zur Spurrichtung, während die Polarisationsrichtung des hinteren Lichtstrahls HL senkrecht zur Spurrichtung steht.

In der Figur 3 sind der Laser L und der doppelbrechende Kristall K abgebildet. Aus dem vom Laser L erzeugten Lichtstrahl, dessen Polarisationsrichtung einen Winkel von 45° zur waagerechten einschließt, erzeugt der doppelbrechende Kristall K den vorderen Lichtstrahl VL und den hinteren Lichtstrahl HL mit den in der Figur 2 gezeigten Polarisationsrichtungen und dem Abstand X auf dem Aufzeichnungsträger AT.

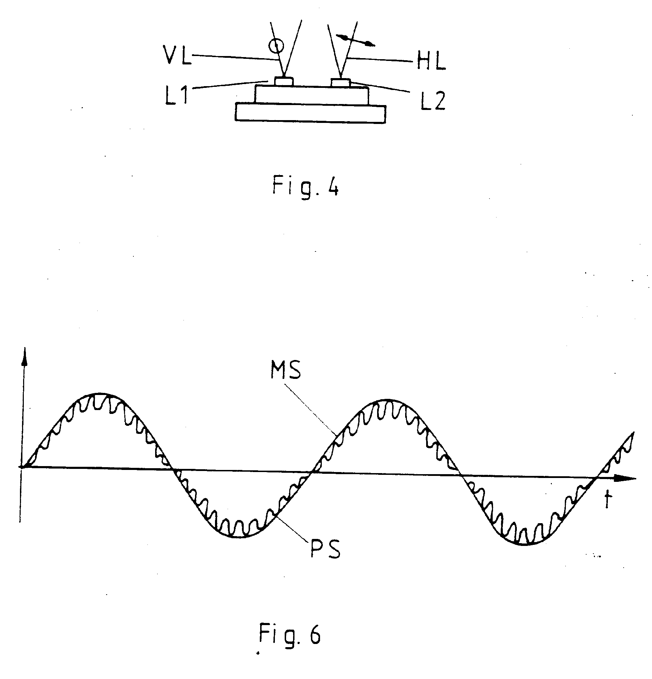

Anstelle eines Lasers und eines doppelbrechenden Kristalls können zwei nebeneinander angeordnete Laser L1 und L2 vorgesehen werden, um den vorderen Lichtstrahl VL und den hinteren Lichtstrahl HL zu erzeugen, wie in Figur 4 dargestellt ist. Die Polarisationsrichtungen der beiden Laserstrahlen VL und HL stehen senkrecht aufeinander.

Es wird nun die in Figur 5 abgebildete Schaltungsanordnung beschrieben; anschließend wird erläutert, wie aus den Ausgangssignalen der Photodetektoren die Regelsignale für den Fokus- und den Spurregelkreis sowie die Datensignale erzeugt werden.

In der Figur 5 sind die Ausgänge der beiden Photodioden A und C, die sich im Vierquadrantenphotodetektor VP diagonal gegenüber liegen, mit den Eingängen eines Addierers A1 verbunden. Die Ausgänge der anderen beiden Photodioden B und D, die sich im Vierquadrantenphotodetektor VP ebenfalls gegenüber liegen, sind mit den Eingängen eines Addierers A2 verbunden. Der Ausgang des Addierers A1 ist mit dem Additionseingang, der Ausgang des Addierers A2 dagegen mit dem Subtraktionseingang eines Differenzverstärkers D1 verbunden. Aus den Ausgangssignalen AS, BS, CS und DS der Photodioden A, B, C und D des Vierquadrantenphotodetektors VP bildet der Differenzverstärker D1 das Fokusfehlersignal FE = (AS + CS) - (BS + DS), das Regelsignal für den Fokusregelkreis. Das Fokusfehlersignal wird nach dem sogenannten Astigmatismusverfahren erzeugt.

Die Ausgangssignale BS und CS der einen beiden nebeneinander liegenden Photodioden B und C des Vierquadrantenphotodetektors VP werden in einem Addierer A3 addiert, dessen Ausgang mit dem Additionseingang eines Differenzverstärkers D2 verbunden ist. Die Ausgangssingale AS und DS der anderen beiden nebeneinander liegenden Photodioden A und D des Vierquadrantenphotodetektors VP werden in einem Addierer A4 addiert, dessen Ausgang mit dem Subtraktionseingang eines Differenzverstärkers D2 verbunden ist. Am Ausgang des Differenzverstärkers D2 ist das Spurfehlersignal TE = (AS + DS) - (BS + CS), das nach dem Push-Pull-Verfahren erzeugte Regelsignal für den Spurregelkreis, abnehmbar.

Die Ausgangssignale ES und GS des Photodetektors E und des Photodetektors G werden in einem Addierer A6 addiert, dessen Ausgangssignal PS das aus den Pits gewonnene Datensignal darstellt.

Die Ausgangssignale AS, BS, CS und DS der Photodioden A, B, C und D des Vierquadrantenphotodetektors VP werden in einem Addierer A5 addiert, dessen Ausgang mit dem Additionseingang eines Differenzverstärkers D4 verbunden ist. Das Ausgangssignal FS des Photodetektors F wird dem Subtraktionseingang des Differenzverstärkers D4 zugeführt. Das Ausgangssignal ES des Photodetektors E wird über ein Verzögerungsglied VZ1 dem Additionseingang eines Differenzverstärker D3 zugeführt, während des Ausgangssignal GS des Photodetektors G über ein Verzögerungsglied VZ2 an den Subtraktionseingang des Differenzverstärkers D3 gelangt. Der Ausgang des Differenzverstärkers D3 ist mit dem Subtraktionseingang eines Differenzverstärkers D5 verbunden, dessen Additonseingang mit dem Ausgang des Differenzverstärkers D4 verbunden ist. Am Ausgang des Differenzverstärkers D5 ist deshalb das aus den in der magnetischen Schicht des Aufzeichnungsträgers AT gespeicherten Daten erzeugte Datensignal MS = (AS + BS + CS + DS - FS) - (ES - GS) abnehmbar.

Die beiden Verzögerungsglieder VZ1 und VZ2 sind erforderlich, weil das Datensignal MS, das die in der magnetischen Schicht aufgezeichneten Daten wiedergibt, nicht wie das Datensignal PS, das die mittels der Pits gespeicherten Daten wiedergibt, nur vom vorderen Lichtstrahl VL, sondern sowohl vom vorderen als auch vom hinteren Lichtstrahl erzeugt wird, die auf dem Aufzeichnungsträger im Abstand X voneinander entfernt liegen. Die beiden Verzögerungsglieder VZ1 und VZ2 kompensieren den zeitlichen Versatz zwischen den Ausgangssignalen ES und GS der Photodetektoren E und G einerseits und den Ausgangssignalen AS, BS, CS, DS und FS der Photodetektoren VP und F andererseits.

Weil der vordere Lichtstrahl VL und der hintere Lichtstrahl HL den gleichen Querschnitt haben, ist es sinnvoll, alle Photodetektoren VP, E, F und G gleich groß zu wählen. In den Figuren 1 und 5 sind die Photodetektoren deshalb als Quadrate gleicher Größe gezeichnet.

Durch die Maßnahme, anstelle mit einem Lichtstrahl, wie es in der DE-OS 37 32 874 vorgeschlagen ist, den Aufzeichnungsträger mit zwei Lichtstrahlen abzutasten, die in einem vorgebbaren Abstand auf den Aufzeichnungsträger treffen, wird das Nebensprechen weitestgehend unterdrückt.

In Figur 6 ist das aus den in der magnetischen Schicht des Aufzeichnungsträgers gespeicherten Daten gewonnene Datensignal MS gezeigt, dessen Frequenz z.B. 10 KHz betragen möge. Das Datensignal MS ist aber von einer Schwingung mit z.B. 100 KHz überlagert, die von dem Datensignal verursacht wird, das aus den mittels der Pits gespeicherten Daten gewonnen wird. Die Amplituden der überlagerten Schwingung von 100 KHz können jedoch erheblich verkleinert werden, wenn wie in Figur 4 gezeigt ist, zwei Laser vorgesehen sind, um den vorderen und den hinteren Lichtstrahl zu erzeugen.

Die Erfindung ist für ein optisches Aufzeichnungs- und/oder Wiedergabegerät geeignet, das sowohl optische als auch magneto-optische Aufzeichnungsträger als auch eine Kombination von beiden lesen kann. Die Erfindung läßt sich vorteilhaft in der Datenverarbeitung einsetzen, weil gleichzeitig Daten gelesen und aufgezeichnet werden können. Aber auch bei CD-Spielern und Videoplattenspielern bietet die Erfindung z.B. den Vorteil, daß gleichzeitig mit der Wiedergabe auch Ton und Bild aufgenommen werden können.

## Patentansprüche

1. Verfahren für eine optische Abtastvorrichtung zum Lesen eines magneto-optischen Aufzeichnungsträgers, auf dem Daten übereinander in einer magnetischen Schicht und in Form von Pits gespeichert sind, wobei eine Lichtquelle Licht auf den Aufzeichnungsträger strahlt und wobei das vom Aufzeichnungsträger reflektierte Licht in Abhängigkeit von seiner Polarisationsrichtung auf einen ersten Photodetektor oder auf einen zweiten Photodetektor gelenkt wird, **dadurch gekennzeichnet,** daß ein vorderer Lichtstrahl (VL), der in einer ersten Polarisationsebene polarisiert ist, und ein hinterer Lichtstrahl (HL), der in einer zur ersten Polarisationsebene senkrecht stehenden zweiten Polarisationsebene polarisiert ist, so auf den Aufzeichnungsträger (AT) gerichtet sind, daß der vordere Lichtstrahl (VL) in einem vorgebbaren Abstand (X) vor dem hinteren Lichtstrahl (HL) auf den Aufzeichnungsträger (AT) trifft, daß die in der ersten Polarisationsebene schwingende Komponente des vom Aufzeichnungsträger (AT) reflektierten vorderen Lichtstrahls auf einen ersten Photodetektor (E) und die in der zweiten Polarisationsebene schwingende Komponente des vom Aufzeichnungsträger (AT) reflektierten vorderen Lichtstrahls (VL) auf einen zweiten Photodetektor (G) gelenkt wird, daß die in der ersten Polarisationsebene schwingende Komponente des vom Aufzeichnungsträger (AT) reflektierten hinteren Lichtstrahls (HL) auf einen Vierquadrantenphotodetektor (VP) aus vier Photodioden (A, B, C, D) und die in der zweiten Polarisationsebene schwingende Komponente des vom Aufzeichnungsträger (AT) reflektierten hinteren Lichtstrahls (HL) auf einen dritten Photodetektor (F) gelenkt wird, daß aus den Ausgangssignalen des Vierquadrantenphotodetektors (VP) ein Fokusfehlersignal (FE) für einen Fokusregelkreis und ein Spurfehlersignal (TE) für einen Spurregelkreis erzeugt werden und daß durch Addition der Ausgangssignale des ersten Photodetektors (E) und des zweiten Photodetektors (G) dasjenige Datensignal (PS) gewonnen wird, das die in den Pits gespeicherten Daten wiedergibt, während durch Addition und Subtraktion der Ausgangssignale des ersten, zweiten und dritten Photodetektors (E, G, F) sowie durch zeitliche Verzögerung der Ausgangssignale (ES, GS) des ersten und zweiten Photodetektors (E, G), die gerade den Abstand (X) zwischen dem vorderen und hinteren Lichtstrahl (VL, HL) kompensiert, dasjenige Datensignal (MS) gewonnen wird, das die in der magnetischen Schicht gespeicherten Daten wiedergibt.

2. Verfahren nach Anspruch 1, **dadurch gekennzeichnet,** daß das Licht eines Lasers (L) durch eine erste Kollimatorlinse (KL) zu einem doppelbrechenden Kristall (K) gelenkt wird, der den vorderen und den hinteren Lichtstrahl (VL, HL) erzeugt, daß der vordere und der hintere Lichtstrahl (VL, HL) einen Prismenstrahlteiler (PM) und eine Objektivlinse (O) durchstrahlend auf den Aufzeichnungsträger (AT) treffen, der sie zurück zum Prismenstrahlteiler (PM) reflektiert, daß der Prismenstrahlteiler (PM) die vom Aufzeichnungsträger (AT) reflektierten Lichtstrahlen (VL, HL) zu einer /2-Platte (PL) lenkt, hinter der ein Polarisationsstrahlteiler (PO) angeordnet ist, daß der Polarisationsstrahlteiler (PO) die in der ersten Polarisationsebene schwingende Komponente des vom Aufzeichnungsträger (AT) reflektierten vorderen Lichtstrahls (VL) eine erste konvexe Linse (L1) und eine erste Zylinderlinse (Z1) durchstrahlend auf den ersten Photodetektor (E) und die in der zweiten Polarisationsebene schwingende Komponente des vom Aufzeichnungsträger (AT) reflektierten vorderen Lichtstrahls (VL) eine zweite konvexe Linse (L2) und eine zweite Zylinderlinse (Z2) durchstrahlend auf den zweiten Photodetektor (G) richtet, daß die in der ersten Polarisationsebene schwingende Komponente des vom Aufzeichnungsträger (AT) reflektierten hinteren Lichtstrahls (HL) vom Polarisationsstrahlteiler (PO) die erste konvexe Linse (L1) und die erste Zylinderlinse (Z1) durchstrahlend auf den Vierquadrantenphotodetektor (VP) und daß die in der zweiten Polarisationsebene schwingende Komponente des vom Aufzeichnungsträger (AT) reflektierten hinteren Lichtstrahls (HL) die zweite konvexe Linse (L2) und die zweite Zylinderlinse (Z2) durchstrahlend auf den dritten Photodetektor (F) gerichtet wird.

3. Verfahren nach Anspruch 1, **dadurch gekennzeichnet,** daß eine erste Lichtquelle (L1) den vorderen Lichtstrahl (VL) erzeugt, daß eine zweite Lichtquelle (L2) den hinteren Lichtstrahl (HL) erzeugt, daß die beiden Lichtstrahlen (VL, HL) eine Kollimatorlinse (KL), einen Prismenstrahlteiler (PM) und eine Objektivlinse (O) durchstrahlend auf den Aufzeichnungsträger (AT) treffen, der sie zurück zum Prismenstrahlteiler (PM) reflektiert, daß der Prismenstrahlteiler (PM) die vom Aufzeichnungsträger (AT) reflektierten Lichtstrahlen (VL, HL) zu einer /2-Platte (PL) lenkt, hinter der ein Polarisationsstrahlteiler (PO) angeordnet ist, daß der Polarisationsstrahlteiler (PO) die in der ersten Polarisationsebene schwingende Komponente des vom Aufzeichnungsträger (AT) reflektierten vorderen Lichtstrahls (VL) eine erste konvexe Linse (L1) und eine erste Zylinderlinse (Z1) durchstrahlend auf den ersten Photodetektor (E) und die in der zweiten Polarisationsebene schwingende Komponente des vom Aufzeichnungsträger (AT) reflektierten vorderen Lichtstrahls (VL) eine zweite konvexe Linse (L2) und eine zweite Zylinderlinse (Z2) durchstrahlend auf den zweiten Photodetektor (G) richtet, daß die in der ersten Polarisationsebene schwingende Komponente des vom Aufzeichnungsträger (AT) reflektierten hinteren Lichtstrahls (HL) vom Polarisationsstrahlteiler (PO) die erste konvexe Linse (L1) und die erste Zylinderlinse (Z1) durchstrahlend auf den Vierquadrantenphotodetektor (VP) und daß die in der zweiten Polarisationsebene schwingende Komponente des vom Aufzeichnungsträger (AT) reflektierten hinteren Lichtstrahls (HL) die zweite konvexe Linse (L2) und die zweite Zylinderlinse (Z2) durchstrahlend auf den dritten Photodetektor (F) gerichtet wird.

4. Verfahren nach Anspruch 1, 2, oder 3, **dadurch gekennzeichnet,** daß die Polarisationsrichtung des vorderen Lichtstrahls (VL) parallel zur Richtung der jeweils abgetasteten Datenspur (T) des Aufzeichnungsträgers (AT) verläuft.

5. Verfahren nach Anspruch 1, 2, 3 oder 4, **dadurch gekennzeichnet,** daß der Vierquadrantenphotodetektor (VP) und der erste Photodetektor (E) auf einem gemeinsamen Träger (T1) sitzen.

6. Verfahren nach Anspruch 1, 2, 3, 4 oder 5, **dadurch gekennzeichnet,** daß der zweite und dritte Photodetektor (F, G) auf einem gemeinsamen Träger (T2) sitzen.

7. Verfahren nach Anspruch 1, 2, 3, 4, 5 oder 6, **dadurch gekennzeichnet,** daß in einem ersten Addierer (A1) die Ausgangssignale (AS, CS) der einen beiden sich diagonal gegenüber liegenden Photodioden (A, C) des Vierquadrantenphotodetektors (VP) addiert werden, daß in einem zweiten Addierer (A2) die Ausgangssingale (BS, DS) der anderen beiden sich diagonal gegenüber liegenden Photodioden (B, D) des Vierquadrantenphotodetektors (VP) addiert werden, daß der Ausgang des ersten und des zweiten Addierers (A1, A2) mit den Eingängen eines ersten Differenzverstärkers (D1) verbunden sind, an dessen Ausgang des Fokusfehlersignal (FE) für den Fokusregelkreis abnehmbar ist, daß die Ausgangssignale (BS, CS) der einen beiden nebeneinander liegenden Photodioden (B, C) des Vierquadrantenphotodetektors (VP) in einem dritten Addierer (A3) addiert werden, daß die Ausgangssignale (AS, DS) der anderen beiden nebeneinander liegenden Photodioden (A, D) des Vierquadrantenphotodetektors (VP) in einem vierten Addierer (A4) addiert werden, daß die Ausgänge des dritten und vierten Addierers (A3, A4) mit den Eingängen eines zweiten Differenzverstärkers (D2) verbunden sind, an dessen Ausgang des Spurfehlersignal (TE) für den Spurregelkreis abnehmbar ist, daß in einem fünften Addierer (A5) die Summe der Ausgangssingale (AS, BS, CS, DS) der vier Photodioden (A, B, C, D) des Vierquadrantenphotodetektors (VP) gebildet wird, daß in einem sechsten Addierer (A6) das Ausgangssignal (ES) des ersten Photodetektors (E) und das Ausgangssignal (GS) des zweiten Photodetektors (G) addiert werden, daß am Ausgang des sechsten Addierers (A6) das aus den Pits gewonnene Datensignal (PS) abnehmbar ist, daß das Ausgangssignal (ES) des ersten Photodetektors (E) über ein erstes Verzögerungsglied (VZ1) an den Additionseingang eines dritten Differenzverstärkers (D3) gelangt, daß das Ausgangssignal (GS) des zweiten Photodetektors (G) über ein zweites Verzögerungsglied (VZ2) an den Subtraktionseingang des dritten Differenzverstärkers (D3) gelangt, daß der Ausgang des fünften Addierers (A5) mit dem Additionseingang eines vierten Differenzverstärkers (D4) verbunden ist, daß das Ausgangssignal (FS) des dritten Photodetektors (F) am Subtraktionseingang des vierten Differenzverstärkers (D4) liegt, daß der Ausgang des dritten Differenzverstärkers (D3) mit dem Additionseingang und der Ausgang des vierten Differenzverstärkers (D4) mit dem Subtraktionseingang eines fünften Differenzverstärkers (D5) verbunden ist, an dessen Ausgang das aus der magnetischen Schicht gewonnene Datensignal (MS) abnehmbar ist.

8. Verfahren nach Anspruch 1, 2, 3, 4, 5, 6 oder 7, **dadurch gekennzeichnet,** daß alle Photodetektoren (VP, E, F, G) gleich groß gewählt sind.

## Claims

1. A method for an optical scanning device for reading a magneto-optical recording medium, on which data are stored above one another in a magnetic layer and in the form of pits, in which a light source shines light on the recording medium and in which the light reflected from the recording medium is directed in dependence on its direction of polarisation onto a first photodetector or onto a second photodetector, characterised in that a leading light beam (VL) which is polarised in a first plane of polarisation, and a trailing light beam (HL), which is polarised in a second plane of polarisation oriented perpendicular to the first plane of polarisation, are so directed onto the recording medium (AT) that the leading light beam (VL) is incident upon the recording medium (AT) at a predetermined spacing (X) in front of the trailing light beam (HL), that the component of the leading light beam reflected from the recording medium (AT) oscillating in the first plane of polarisation is directed onto a first photodetector (E) and the component of the leading light beam (VL) reflected from the recording medium (AT) oscillating in the second plane of polarisation is directed onto a second photodetector (G), that the component of the trailing light beam (HL) reflected from the recording medium (AT) oscillating in the first plane of polarisation is directed onto a four-quadrant photodetector (VP) consisting of four photodiodes (A,B,C,D) and the component of the trailing light beam (HL) reflected from the recording medium (AT) oscillating in the second plane of polarisation is directed onto a third photodetector (F), that a focussing error signal (FE) for a focussing control circuit and a tracking error signal (TE) for a tracking control circuit are produced from the output signals of the four-quadrant photodetector (VP) and that by addition of the output signals of the first photodetector (E) and the second photodetector (G) the data signal (PS) is obtained, which reproduces the data stored in the pits, while by addition and subtraction of the output signals of the first, second and third photodetectors (E,G,F) and by delaying the output signals (ES, GS) of the first and second photodetectors (E,G) to exactly compensate for the spacing (X) between the leading and trailing light beams (VL, HL), the data signal (MS) is obtained which reproduces the data stored in the magnetic layer.

2. A method according to claim 1, characterised in that the light of a laser (L) is deflected through a first collimator lens (KL) to a double refractive crystal (K), which produces the leading and trailing light beams (VL, HL) , that the leading and trailing light beams (VL, HL) pass through a prismatic beam splitter (PM) and an objective lens (O) and are incident upon the recording medium (AT) which reflects them back to the prismatic beam splitter (PM),that the prismatic beam splitter (PM) deflects the light beam (VL, HL) reflected from the recording medium (AT) to a λ/2-plate, subsequent to which there is arranged a polarisation beam splitter (PO), that the polarisation beam splitter (PO) directs the component of the leading light beam (VL) reflected from the recording medium (AT) oscillating in the first plane of polarisation to pass through a first convex lens (L1) and a first cylindrical lens (Z1) to the first photodetector (E) and the component of the leading light beam (VL) reflected from the recording medium (AT) oscillating in the second plane of polarisation to pass through a second convex lens (L2) and a second cylindrical lens (Z2) onto the second photodetector (G), that the component of the trailing light beam (HL) reflected from the recording medium (AT) oscillating in the first plane of polarisation is directed by the polarisation beam splitter (PO) to pass through the first convex lens (L1) and the first cylindrical lens (Z1) onto the four-quadrant photodetector (VP) and that the component of the trailing light beam (HL) reflected from the recording medium (AT) oscillating in the second plane of polarisation is directed to pass through the second convex lens (L2) and the second cylindrical lens (Z2) onto the third photodetector (F).

3. A method according to claim 1, characterised in that a first light source (L1) produces the leading light beam (VL), that a second light source (L2) produces the trailing light beam (HL), that the two light beams (VL, HL) pass through a collimator lens (KL), a prismatic beam splitter (PM) and an objective lens (O) and are incident upon the recording medium (AT), which reflects them back to the prismatic beam splitter (PM), that the prismatic beam splitter (PM) deflects the light beams (VL, HL) reflected from the recording medium (AT) to a λ/2 plate (PL), subsequent to which there is arranged a polarisation beam splitter (PO), that the polarisation beam splitter (PO) directs the component of the leading light beam (VL) reflected from the recording medium (AT) oscillating in the first plane of polarisation to pass through a first convex lens (L1) and a first cylindrical lens (Z1) onto the first photodetector (E) and the component of the leading light beam (VL) reflected from the recording medium (AT) oscillating in the second plane of polarisation to pass through a second convex lens (L2) and a second cylindrical lens (Z2) onto the second photodetector (G), that the component of the trailing light beam (HL) reflected from the recording medium (AT) oscillating in the first plane of polarisation is directed by the polarisation beam splitter (PO) to pass through the first convex lens (L1) and the first cylindrical lens (Z1) onto the four-quadrant photodetector (VP) and that the component of the trailing light beam (HL) reflected from the recording medium (AT) oscillating in the second plane of polarisation is directed to pass through the second convex lens (L2) and the second cylindrical lens (Z2) onto the third photodetector (F).

4. A method according to claim 1, 2 or 3, characterised in that the direction of polarisation of the leading light beam (VL) extends parallel to the direction of the currently scanned data track (T) of the recording medium (AT).

5. A method according to claim 1, 2, 3 or 4, characterised in that the four-quadrant photodetector (VP) and the first photodetector (E) are located on a common carrier (T1).

6. A method according to claim 1, 2, 3, 4 or 5, characterised in that the second and third photodetectors (F,G) are located on a common carrier (T2).

7. A method according to claim 1, 2, 3, 4, 5 or 6, characterised in that in a first adder (A1) there are added the output signals (AS, CS) of one pair of mutually diagonally photodiodes (A,C) of the four-quadrant detector (VP), that in a second adder (A2) there are added the output signals (BS, DS) of the other pair of mutually diagonally located photodiodes (B,D) of the four-quadrant photodetector (VP), that the output of the first and the second adders (A1, A2) are connected to the inputs of a first differential amplifier (D1), at the output of which may be picked up the focussing error signal (FE) for the focussing control circuit, that the output signals (BS, CS) of a first pair of adjacent photodiodes (B ,C) of the four-quadrant photodetector (VP) are added in a third adder (A3) that the output signals (AS, DS) of the other pair of mutually adjacent photodiodes (A,D) of the four-quadrant photodetector (VP) are added in a fourth adder (A4) that the outputs of the third and fourth adders (A3, A4) are connected to the inputs of a second differential amplifier (D2), at the output of which the tracking error signal (TE) for the tracking control circuit can be picked up, that in a fifth adder (A5) there is formed the sum of the output signals (AS, BS, CS, DS) of the four photodiodes (A,B,C,D) of the four-quadrant photodetector (VP), that in a sixth adder (A6) there are added the output signal (ES) of the first photodetector (E) and the output signal (GS) of the second photodetector (G), that at the output of the sixth adder (A6) there can be a picked up the data signal (PS) obtained from the pits, that the output signal (ES) of the first photodetector (E) arrives at the adding input of a third differential amplifier (D3) via a first delay line (VZ1), that the output signal (GS) of the second photodetector (G) arrives at the subtraction input of the third differential amplifier (D3) via a second delay line (VZ2), that the output of the fifth adder (A5) is connected to the adding input of a fourth differential amplifier (D4), that the output signal (FS) of the third photodetector (F) is applied to the subtraction input of the fourth differential amplifier (D4), that the output of the third differential amplifier (D3) is connected to the adding input and the output of the fourth differential amplifier (D4) is connected to the subtraction input of a fifth differential amplifier (D5), at the output of which there can be picked up the data signal (MS) obtained from the magnetic layer.

8. A method according to claim 1,2,3,4,5,6,or 7, characterised in that all photodetectors (VP, E, F, G) are selected to be the same size.

## Revendications

1. Procédé pour un dispositif d'exploration optique pour lire un support d'enregistrement magnéto-optique sur lequel des données sont mises en mémoire les unes au-dessus des autres dans une couche magnétique et en forme de creux, une source de lumière rayonnant de la lumière sur le support d'enregistrement et la lumière réfléchie par le support d'enregistrement étant guidée, en fonction de son sens de polarisation, sur un premier détecteur photoélectrique ou sur un second détecteur photoélectrique, **caractérisé en ce** qu'un faisceau de lumière avant (VL), qui est polarisé dans un premier plan de polarisation, et un faisceau de lumière arrière (HL), qui est polarisé dans un second plan de polarisation perpendiculaire au premier plan de polarisation sont dirigés sur le support d'enregistrement (AT) de telle manière que le faisceau de lumière avant (VL) touche le support d'enregistrement (AT) à une distance (X) qui peut être prédéfinie devant le faisceau de lumière arrière (HL), que la composante, qui oscille dans le premier plan de polarisation, du faisceau de lumière avant réfléchi par le support d'enregistrement (AT) est dirigée sur un premier détecteur photoélectrique (E) et que la composante, qui oscille dans le second plan de polarisation, du faisceau de lumière avant (VL) réfléchi par le support d'enregistrement (AT) est dirigée sur un second détecteur photoélectrique (G), que la composante, qui oscille dans le premier plan de polarisation, du faisceau de lumière arrière (HL) réfléchi par le support d'enregistrement (AT) est dirigée sur un détecteur photoélectrique à quatre quadrants (VP) composé de quatre photodiodes (A, B, C, D) et la composante, qui oscille dans le second plan de polarisation, du faisceau de lumière arrière réfléchi (HL) par le support d'enregistrement (AT) est dirigée sur un troisième détecteur photoélectrique (F), qu'un signal d'erreur de foyer (FE) pour un circuit de réglage de foyer et un signal d'erreur de piste (TE) pour un circuit de réglage de piste sont produits à partir des signaux de sortie du détecteur photoélectrique à quatre quadrants (VP) et que, par addition des signaux de sortie du premier détecteur photoélectrique (E) et du second détecteur photoélectrique (G), on obtient le signal de données (PS) qui reproduit les données mises en mémoire dans les creux, tandis que, par addition et soustraction des signaux de sortie du premier, du second et du troisième détecteur photoélectrique (E, G, F) ainsi que par temporisation des signaux de sortie (ES, GS) du premier et du second détecteur photoélectrique (E, G), qui compense tout juste l'écart (X) entre le faisceau de lumière avant et le faisceau de lumière arrière (VL, HL), on obtient le signal de données (MS) qui reproduit les données mises en mémoire dans la couche magnétique.

2. Procédé selon la revendication 1, **caractérisé en ce** que la lumière d'un laser (L) est dirigée à travers une première lentille de collimateur (KL) vers un cristal biréfringent (K) qui produit le faisceau de lumière avant et le faisceau de lumière arrière (VL, HL), que le faisceau de lumière avant et le faisceau de lumière arrière (VL, HL) traversent un séparateur de faisceaux à prismes (PM) et une lentille d'objectif (O) et touchent le support d'enregistrement (AT) qui les reflète à nouveau vers le séparateur de faisceaux à prismes (PM), que le séparateur de faisceaux à prismes (PM) guide les faisceaux de lumière (VL, HL) réfléchis par le support d'enregistrement (AT) vers une lame λ/2 (PL) derrière laquelle est placé un séparateur de faisceaux de polarisation (PO), que le séparateur de faisceaux de polarisation (PO) dirige la composante, qui oscille dans le premier plan de polarisation, du faisceau de lumière avant (VL) réfléchi par le support d'enregistrement (AT), en traversant une première lentille convexe (L1) et une première lentille cylindrique (Z1), sur le premier détecteur photoélectrique (E) et la composante, qui oscille dans le second plan de polarisation, du faisceau de lumière avant (VL) réfléchi par le support d'enregistrement (AT), en traversant une seconde lentille convexe (L2) et une seconde lentille cylindrique (Z2), sur le second détecteur photoélectrique (G), que la composante, qui oscille dans le premier plan de polarisation, du faisceau de lumière arrière (HL) réfléchi par le support d'enregistrement (AT), est dirigée par le séparateur de faisceaux de polarisation (PO), en traversant la première lentille convexe (L1) et la première lentille cylindrique (Z1), sur le détecteur photoélectrique à quatre quadrants (VP) et que la composante, qui oscille dans le second plan de polarisation, du faisceau de lumière arrière (HL) réfléchi par le support d'enregistrement (AT), est dirigée, en traversant la seconde lentille convexe (L2) et la seconde lentille cylindrique (Z2), sur le troisième détecteur photoélectrique (F).

3. Procédé selon la revendication 1, **caractérisé en ce** qu'une première source de lumière (L1) produit le faisceau de lumière avant (VL), qu'une seconde source de lumière (L2) produit le faisceau de lumière arrière (HL), que les deux faisceaux de lumière (VL, HL) traversent une lentille de collimateur (KL), un séparateur de faisceaux à prismes (PM) et une lentille d'objectif (O) et touchent le support d'enregistrement (AT), qui les réfléchit à nouveau vers le séparateur de faisceaux à prismes (PM), que le séparateur de faisceaux à prismes (PM) dirige les faisceaux de lumière (VL, HL) réfléchis par le support d'enregistrement (AT) vers une lame λ/2 (PL) derrière laquelle est placé un séparateur de faisceaux de polarisation (PO), que le séparateur de faisceaux de polarisation (PO) dirige la composante, qui oscille dans le premier plan de polarisation, du faisceau de lumière avant (VL) réfléchi par le support d'enregistrement (AT), en traversant une première lentille convexe (L1) et une première lentille cylindrique (Z1), sur le premier détecteur photoélectrique (E) et la composante, qui oscille dans le second plan de polarisation, du faisceau de lumière avant (VL) réfléchi par le support d'enregistrement (AT), en traversant une seconde lentille convexe (L2) et une seconde lentille cylindrique (Z2), sur le second détecteur photoélectrique (G), que la composante, qui oscille dans le premier plan de polarisation, du faisceau de lumière arrière (HL) réfléchi par le support d'enregistrement (AT), est dirigée par le séparateur de faisceaux de polarisation (PO), en traversant la première lentille convexe (L1) et la première lentille cylindrique (Z1), sur le détecteur photoélectrique à quatre quadrants (VP) et que la composante, qui oscille dans le second plan de polarisation, du faisceau de lumière arrière (HL) réfléchi par le support d'enregistrement (AT), est dirigée, en traversant la seconde lentille convexe (L2) et la seconde lentille cylindrique (Z2), sur le troisième détecteur photoélectrique (F).

4. Procédé selon la revendication 1, 2 ou 3, **caractérisé en ce** que le sens de polarisation du faisceau de lumière avant (VL) est parallèle au sens de la piste de données (T) respectivement explorée du support d'enregistrement (AT).

5. Procédé selon la revendication 1, 2, 3 ou 4, **caractérisé en ce** que le détecteur photoélectrique à quatre quadrants (VP) et le premier détecteur photoélectrique (E) se trouvent sur un support commun (T1).

6. Procédé selon la revendication 1, 2, 3, 4 ou 5, **caractérisé en ce** que le second et le troisième détecteur photoélectrique (F, G) se trouvent sur un support commun (T2).

7. Procédé selon la revendication 1, 2, 3, 4, 5 ou 6, **caractérisé en ce** que les signaux de sortie (AS, CS) de l'un des deux groupes de photodiodes (A, C) opposées diagonalement du détecteur photoélectrique à quatre quadrants (VP) sont additionnés dans un premier addeur (A1), que les signaux de sortie (BS, DS) des deux autres photodiodes (B, D) diagonalement opposées du détecteur photoélectrique à quatre quadrants (VP) sont additionnés dans un second addeur (A2), que la sortie du premier et du second addeur (A1, A2) sont reliées aux entrées d'un premier amplificateur différenciateur (D1), à la sortie duquel le signal d'erreur de foyer (FE) pour le circuit de réglage de foyer peut être prélevé, que les signaux de sortie (BS, CS) de l'un des deux groupes de photodiodes (B, C) situées l'une à côté de l'autre du détecteur photoélectrique à quatre quadrants (VP) sont additionnés dans un troisième addeur (A3), que les signaux de sortie (AS, DS) des deux autres photodiodes situées l'une à côté de l'autre (A, D) du détecteur photoélectrique à quatre quadrants (VP) sont additionnés dans un quatrième addeur (A4), que les sorties du troisième et du quatrième addeur (A3, A4) sont reliées aux entrées d'un second amplificateur différenciateur (D2), à la sortie duquel le signal d'erreur de piste (TE) pour le circuit de réglage de piste peut être prélevé, que la somme des signaux de sortie (AS, BS, CS, DS) des quatre photodiodes (A, B, C, D) du détecteur photoélectrique à quatre quadrants (VP) est formée dans un cinquième addeur (A5), que le signal de sortie (ES) du premier détecteur photoélectrique (E) et le signal de sortie (GS) du second détecteur photoélectrique (G) sont additionnés dans un sixième addeur (A6), que le signal de données (PS) obtenu à partir des creux peut être prélevé à la sortie du sixième addeur (A6), que le signal de sortie (ES) du premier détecteur photoélectrique (E) arrive, par un premier élément de retard (VZ1), à l'entrée d'addition d'un troisième amplificateur différenciateur (D3), que le signal de sortie (GS) du second détecteur photoélectrique (G) arrive, par un second élément de retard (VZ2), à l'entrée de soustraction du troisième amplificateur différenciateur (D3), que le sortie du cinquième addeur (A5) est reliée à l'entrée d'addition d'un quatrième amplificateur différenciateur (D4), que le signal de sortie (FS) du troisième détecteur photoélectrique (F) se trouve à l'entrée de soustraction du quatrième amplificateur différenciateur (D4), que la sortie du troisième amplificateur différenciateur (D3) est reliée à l'entrée d'addition et la sortie du quatrième amplificateur différenciateur (D4) à l'entrée de soustraction d'un cinquième amplificateur différenciateur (D5) à la sortie duquel le signal de données (MS) qui est obtenu à partir de la couche magnétique peut être prélevé.

8. Procédé selon la revendication 1, 2, 3, 4, 5, 6 ou 7, **caractérisé en ce** que tous les détecteurs photoélectriques (VP, E, F, G) sont choisis de même grandeur.
